# EUROPÄISCHE PATENTSCHRIFT

(11) **EP 2 360 082 B1**
(45) Veröffentlichungstag und Bekanntmachung des Hinweises auf die Patenterteilung: **11.09.2013**
(21) Anmeldenummer: 10154201.7
(22) Anmeldetag: 22.02.2010
(51) Int. Cl.: B62D 29/04, B62D 53/06

(54) **Längsträger für ein Fahrgestell und Verfahren für seine Herstellung**
Longitudinal member for a chassis and method for producing same
Support longitudinal pour un châssis et son procédé de fabrication

(43) Veröffentlichungstag der Anmeldung: 24.08.2011
(73) Patentinhaber: Kaiser, Ria, 21077 Hamburg (DE); Lange, Hans Juergen, 21077 Hamburg (DE)
(72) Erfinder: Kaiser, Ria, 21077 Hamburg (DE); Lange, Hans Juergen, 21077 Hamburg (DE)
(74) Vertreter: Raffay & Fleck

(56) Entgegenhaltungen:
- EP-A2- 0 908 300
- WO-A1-01/51338
- US-A- 4 573 707
- US-A- 5 882 460
- US-B1- 6 962 390

## Beschreibung

Die vorliegende Erfindung betrifft ein Fahrgestell eines Fahrzeuges sowie ein Verfahren für dessen Herstellung. Sie betrifft ferner ein Fahrzeug mit einem einen neuartigen Fahrgestell.

Fahrgestelle für Fahrzeuge, egal ob angetrieben oder gezogen, sind hohen Belastungen ausgesetzt und müssen entsprechend zur Aufnahme hoher Kräfte ausgelegt werden. Insbesondere im Bereich von Last transportierenden Fahrzeugen, wie Lastkraftwagen, Anhängern, Sattelaufliegern und dgl. gibt es Bestrebungen, das Fahrzeugeigengewicht soweit als möglich zu reduzieren, um die zuladbare Nutzlast zu erhöhen. Mit einer solchen Erhöhung der Nutzlast geht eine deutliche Verbesserung der Wirtschaftlichkeit einher. So können entweder mehr Güter während einer Transportfahrt transportiert werden, oder das Gesamtgewicht des Fahrzeuges reduziert sich bei gleicher Zuladung, was zu einer Absenkung des Kraftstoffverbrauches und auch einem ansonsten geringeren Verschleiß (Reifen, Bremsen, Kupplung und dgl.) führt. Diese allgemeinen Betrachtungen gelten aber nicht nur für Nutzfahrzeuge, auch für allein für den Transport von Personen bestimmte Fahrzeuge, wie etwa Omnibusse, aber auch Kraftfahrzeuge für den Individualverkehr, treffen ähnliche Überlegungen zu. Auch hier bringt eine Gewichtsersparnis bei gleicher Stabilität und Steifigkeit des Fahrwerkes Einsparungen im Kraftstoffverbrauch mit sich, die sich zudem günstig auf die Umwelt auswirken. Die Möglichkeiten der Gewichtsersparnis sind bei den bekannten Bauweisen von Fahrgestellen aus den bisher üblichen Materialien (insbesondere Stahl) an ihre Grenzen gestoßen. Entsprechend werden seit einiger Zeit Überlegungen mit neuen Werkstoffen angestellt, wobei hier Faserverbundwerkstoffe, dabei insbesondere Kohlefaser-Verbundwerkstoffe, ein besonderes Interesse der Konstrukteure genießen.

So ist z.B. in der EP 1 609 704 A2 ein vollständig aus Kohlefaser-Verbundwerkstoff gebildetes Fahrgestell für einen Lkw-Motorwagen oder Anhänger beschrieben. Dieses wird aus zwei U-förmig gebildeten, ineinandergesetzten Halbschalen aufgebaut, die jede für sich aus Kohlefaserverbundstoffen (CFK) bestehen. Die beiden Halbschalen bilden zusammengefügt ein Hohlbauteil, welches insgesamt das Fahrgestell ausmacht.

Ein solches wie in dieser Druckschrift offenbartes Fahrgestell bringt bereits eine erhebliche Gewichtsersparnis mit sich. Allerdings sind dort aufwendige Verstärkungsmaßnahmen zur Versteifung des Fahrgestells in Längsrichtung vorzunehmen, wofür H-trägerartig gebildete, abgewinkelte Enden an den Seitenwangen der Unterschale dienen. Diese Enden sind einerseits in CFK-Technik wie auch in anderer Faserverbundwerkstoff-Technik, schwer herzustellen, bringen andererseits nur bis zu einem gewissen Grad eine Versteifung und Stabilisierung in Längsrichtung mit sich.

In der EP 0 908 300 A2 ist ein Verfahren zum Herstellen einer rohrförmigen Verbundstruktur und ist ferner einer solche rohrförmige Verbundstruktur an sich offenbart. Dabei werden zunächst eine Glasfasermatte und anschließend Carbonfasermatten, schließlich eine abschließende Glasfasermatte schichtweise übereinander um einen Kern gelegt und mit einem Harz durchtränkt. Der Kern wird entfernt, sobald die Struktur Festigkeit erlangt hat. Eine Verwendung einer solchen rohrförmigen Verbundstruktur zum Aufbau eines Fahrgestelles für ein Fahrzeug findet in dieser Schrift keine Erwähnung.

In der US 4,573,707 ist ein Fahrgestell für ein Fahrzeug in Form eines aus einem Glas- oder Carbonfaserverbundmaterial hergestellten Leiterrahmens offenbart. Dieses ist wegen der komplexen Form und verzweigten Geometrie aufwendig in der Herstellung.

Hier setzt die Erfindung an, indem sie ein einfache in Faserverbundbauweise zu bildendes Fahrgestell für ein Fahrzeug anzugeben sucht, welches dennoch die erforderliche Steifigkeit und hohe Belastbarkeit aufweist. Hierbei wird auch nach einem Verfahren für die Herstellung eines solchen Fahrgestells gesucht.

Diese Aufgabe der Erfindung wird gelöst durch ein Fahrgestell für ein Fahrzeug mit den Merkmalen des Anspruchs 1. Vorteilhafte Weiterbildungen des Fahrgestells sind in den abhängigen Ansprüchen 2 bis 8 beschrieben.

In einem weiteren Aspekt manifestiert sich die Erfindung in einem Verfahren zum Herstellen eines neuartigen Fahrgestells gemäß Anspruch 10 mit vorteilhaften Weiterbildungen gemäß den in den abhängigen Ansprüchen 1 bis 13 angegebenen Schritten. Ein weiterer Aspekt der Erfindung und Lösung der Aufgabe besteht in einem Fahrzeug gemäß den Merkmalen des Anspruchs 9.

Die Erfindung schafft ein Fahrgestell eines Fahrzeuges, welches wenigstens einen Längsträger mit einer ein Inneres in Längsrichtung des Längsträgers vollständig umschließenden, einstückig gebildeten Wand aus einem Faserverbundwerkstoff, insbesondere einem Carbonfaser-Verbundwerkstoff, wie CFK, aufweist.

Dabei ist der Längsträger in besonders hohem Maße Last aufnehmend gestaltet und zugleich dennoch von geringem Gewicht.

Das Fahrgestell enthält dabei als weitere Komponenten aus einem Faserverbundwerkstoff, insbesondere einem Carbonfaserverbundwerkstoff, ein wannenartiges Unterteil mit hochgezogenen Seitenwänden, in welchem der/die Längsträger eingesetzt und festgelegt ist/sind und auf welches ein im Wesentlichen flaches, ebenfalls aus einem Faserverbundwerkstoff, insbesondere einem Carbonfaserverbundwerkstoff, bestehendes Deckelteil aufgesetzt und mit dem Unterteil, vorteilhafter Weise auch mit dem/den Längsträger(n), fest verbunden ist.

Für die Verbindung der genannten Faserverbundwerkstoffteile eignet sich besonders die Klebetechnik. Diese schafft ohne eine für Verschraubungen oder Vernietungen ansonsten vorzusehende Schwächung der Elemente (durch Durchbohren der Wandungen) eine feste und sehr belastbare Verbindung, die hohe Kräfte aufnehmen kann, ohne Schaden zu nehmen.

Wie zuvor bereits ausgeführt ist es eine Grundvoraussetzung und wesentliche Überlegung der Erfindung, zur Flexibilisierung der Bauweise und verbesserten Längsstabilisierung eines Fahrwerkes mit Elementen der Leichtbauweise wenigstens einen gesonderten Längsträger in einem wannenartigen Unterteil vorzusehen, welches mit einem Deckelteil verschlossen ist. So kann einer, es können zwei oder ggf. sogar drei oder mehr derartiger Längsträger in einem Fahrwerk verbaut werden, je nach der zu erwartenden Beanspruchung und der erforderlichen Versteifung desselben in Längsrichtung.

Das erfindungsgemäße Fahrgestell kann, wenn es wie oben beschrieben aus Carbonfaser-Verbundwerkstoffelementen gebildet ist, an dem Unterteil insbesondere einstückig angeformte Funktionselemente aufweisen, wie z.B. Stau- und Aufnahmeräume (z.B. sogenannte Palettenkästen), Radkästen, Lageransätze für Stützbeine, Aufnahmen für einen Königszapfen oder Sattelplatte oder dgl.). Eine solche Bauweise hat den Vorteil einer insgesamt integralen Bauform des Fahrgestells, bei der bereits eine Vielzahl von ansonsten gesondert anzubringenden Elementen einstückig und damit in besonders hoher Festigkeit mit dem Fahrgestell ausgebildet sind.

In dem wenigstens einen Längsträger des Fahrgestells kann ggf. noch ein Kern angeordnet sein, der insbesondere aus einem geschäumten Material, vorzugsweise geschäumten Kunststoff, hierbei insbesondere geschäumten PE oder geschäumten PP besteht.

Der Längsträger kann zur weiteren Versteifung im Inneren seines Hohlraumes einen zwei Wandungen verbindenden, mit diesem einstückig verbundenen Steg aufweisen. Um einen solchen Längsträger herzustellen, werden bevorzugt zwei Kerne zunächst separat voneinander mit Fasermatten umfangsseitig belegt, dann mit zwei der bereits mit Fasern belegten Wandungen nebeneinander angeordnet und insgesamt noch einmal mit Fasermatten umgeben, bevor sie anschließend insgesamt mit dem Bindemittel durchtränkt und aushärten gelassen werden. An den aneinander anliegenden Wänden der beiden so benachbart angeordneten Kerne bildet sich dann der einstückig mit der umgebenden Wandung des Längsträgers verbundene Steg des Längsträgers in seinem Inneren aus. Die beiden Kerne können nun wieder als verlorene Kerne entfernt werden, sie können aber auch in dem Längsträger verbleiben.

Typischerweise wird man für die Ausbildung des Längsträgers bzw. der das Innere umgebenden Wand mehrere Lagen von übereinander liegenden Fasermatten verwenden, die über ein ausgehärtetes Bindemittel miteinander inniglich verbunden sind. Dabei ist es, wie oben bereits ausgeführt, zu bevorzugen, wenn wenigstens eine, vorzugsweise mehrere, der einzelnen Fasermatten eine aus einzelnen Fasern oder Fasersträngen solche Matte ist bzw. die mehreren Matten solche sind, mit der bzw. mit denen der Kern umflochten ist.

Im Inneren eines in dem Fahrgestell eingesetzten Längsträgers können Leitungen, Leitungsschächte und/oder Lagerkapazitäten für die Lagerung von Betriebmedien (Druckluft, Hydrauliköl, Treibstoff, Wasser oder dgl.) ausgebildet sein. Hierzu können in einem in dem Längsträger verbliebenen Kern bereits entsprechende Strukturen angelegt und mit den erforderlichen Maßnahmen abgedichtet und eingerichtet sein. Zum Beispiel kann für einen im Inneren des Längsträgers auszubildenden Pneumatiktank eine entsprechende Lage aus einer luftundurchlässigen Kunststoffhaut gebildet und in ein geschäumtes Material eines Kernes eingebunden mit entsprechenden Anschlüssen bzw. Zu- und Ableitungen versehen sein. Am Ende des Herstellungsvorganges müssen nur an den entsprechenden Stellen Zugänge zu den Leitungen angebracht werden, um z.B. den Pneumatiktank mit einem Kompressor zu verbinden. Zweckmäßiger Weise werden entsprechende Anschlüsse an den Stirnseiten des Längsträgers vorgesehen, an denen dieser nicht zwingend eine Wand aus Faserverbundmaterial aufweisen muss, eine solche bevorzugt gerade nicht enthält. Um einen Anschluss an einer anderen als den Stirnseiten zu schaffen, kann dieser bei der Erstellung des Fasermattensystems für die Wandung bereits mit berücksichtigt werden, indem z.B. ein Rohr oder dergleichen befestigt und mit Fasern in der Umflechttechnik umflochten wird. Die so sehr stabil mit einbezogene Öffnung wird durch das anschließende Vergießen mit dem Bindemittel integraler und damit sehr stabiler Bestandteil der Wandung des Längsträgers. Auch ist es denkbar, das Innere eines solchen Längsträgers mit einem Leerrohr im Sinne eines Kabelschachtes auszurüsten, durch das elektrische Leitungen z.B. für die Versorgung der Beleuchtung eines Lastkraftwagenanhängers, für den Anschluss einer Rückfahrkamera an einem Auflieger oder dgl. geführt werden. Solche Führungen für elektrische Zu- und Anschlussleitungen sind im Inneren des Längsträgers besonders sich geschützt vor äußeren Einflüssen, können durch die Ausbildung nach Art eines Leerrohres einfach und schnell ausgetauscht werden.

Schließlich können an dem Längsträger sei es durch entsprechende Gestaltung des Kerns oder sei es durch Ansetzen und Festlegen von weiteren durch Näh-, Stick-, Flecht- oder sonstige Technik aus Fasern, insbesondere Carbonfasern, gebildeten Rohlingen an und anschließendes Vergießen derselben mit den Fasermatten bereits weitere Strukturen integral mit dem Längsträger zusammen geformt werden, wie etwa ein oder mehrer Achsböcke, eine Aufnahme für ein Stützbein oder dergleichen Elemente. Dies ermöglicht eine weiter integrierte, hochstabile und äußerst leichtgewichtige Bauweise.

Das erfindungsgemäße Verfahren, mit dem sich ein Fahrgestell herstellen lässt, das den oben aufgezeigten Ansprüchen genügt, zeichnet sich durch folgende Schritte aus:

Zunächst wird wenigstens ein Längsträger gebildet, indem in einem ersten Schritt wenigstens ein die Form des späteren Längsträgers bestimmender Kern hergestellt wird. Anschließend wird dieser Kern mit wenigstens einer Matte aus geeigneten Fasern, insbesondere Carbonfaser, so belegt, dass der Kern in Längsrichtung gesehen umfangsseitig vollständig umschlossen ist. Um dies zu erreichen können auch mehrere Matten aus Fasern aneinander gelegt und/oder übereinander geschichtet werden. Die so um den Kern gelegte Matte bzw. die Matten wird bzw. werden mit einem Bindemittel getränkt, welches insbesondere ein Harz sein kann. Schließlich wird das Bindemittel aushärten gelassen, um einen den Kern umgebenden Faserverbundwerkstoff auszubilden.

Auf die oben geschilderte Weise wird so ein Längsträger mit einer einstückig gebildeten, diesen in Längsrichtung umgebende Wandung erhalten. Die einstückige Ausbildung ist besonders günstig, da sie in Längsrichtung die unterschiedlichen, auf ein späteres Fahrwerk auftreffenden Belastungen sicher aufnehmen kann, ohne Schwachstellen, wie etwa Verbindungsstellen von zwei Schalen, aufzuweisen. So kann dieser Längsträger sowohl gegen Durchbiegung als auch gegen Verwindung ausreichend steif gestaltet werden, ohne dass es hierzu einer erheblichen Wandstärke bedarf. Typische Wandstärken werden in der Regel im Bereich von 5 - 10 mm liegen.

Mit wenigstens einem solchen Längsträger wird dann ein Fahrgestell aufgebaut. Hierzu werden zunächst ein wannenartiges Unterteil mit hochgezogenen Seitenwänden sowie ein Deckelteil bereitgestellt, die beide aus einem Faserverbundwerkstoff, insbesondere einem Carbonfaserverbundwerkstoff, bestehen. In das wannenartige Unterteil wird der wenigstens eine Längsträger eingesetzt und in diesem festgelegt, insbesondere flächig verklebt. Anschließend wird das Unterteil mit dem Deckelteil verschlossen, und es werden diese Teile fest miteinander verbunden, insbesondere verklebt.

Der Kern des wenigstens einen Längsträgers kann dabei als bleibender oder aber auch als verlorener Kern gestaltet sein. Wird der Kern als bleibender Kern gewählt, so ist es von Vorteil, wenn dieser ebenfalls in Leichtbauweise gebildet wird, z.B. aus einem geschäumten Material, insbesondere einem Kunststoffschaum (z.B. PE- oder PP-Schaum). Ein solcher Schaum kann mit hoher Festigkeit und damit guter Bearbeitbarkeit und dennoch geringem Gewicht gebildet sein. Auch kann ein Kern durch eine mit einem Gas befüllbare Hülle gebildet sein. Eine solche Bauweise zeichnet sich durch ein besonders geringes Gewicht aus.

Es ist aber auch insbesondere möglich, den Kern als verlorenen Kern auszubilden, indem beispielsweise ein in einem Lösungsmittel löslicher Kunststoffkern verwendet und anschließend mittels des Lösungsmittels aus dem Hohlraum des ausgehärteten Verbundwerkstoffes im Inneren entfernt wird. Auch andere Arten des Entfernens eines verlorenen Kernes, z.B. thermisches Aufweichen unterhalb einer für den Carbonfaser-Verbundwerkstoff schädigenden Temperatur sind denkbar. Auch kann ein aus einer mit einem Gas befüllbaren Hülle gebildeter Kern, der zunächst wie ein Luftballon mit Gas befüllt und so auf die Größe des Kernes gebracht wird. Nach Aushärten des Verbundwerkstoffes kann durch Ablassen des Gases der Kern in seiner Größe reduziert und entfernt werden.

Eine besonders gute Stabilität und einstückige Ausbildung erhält der in dem Fahrgestell verwendete Längsträger, wenn die Fasermatte, im Fall von mehreren Fasermatten wenigstens eine solche aus einzelnen Fasern oder Fasersträngen eine solche ist, mit der der Kern umflochten ist. Umflechten ist eine seit langem bekannte Technik, mit der ein durchgehendes Gewirk mit innen verbleibendem Hohlraum gebildet werden kann. Diese Technik kann nun angewandt werden, um eine entsprechende Fasermatte passgerecht um den geformten Kern zu flechten, so dass hier bereits die Fasermatte die Einstückigkeit der Wandung des späteren Längsträgers vorgibt, die durch das Umgießen mit dem Bindemittel noch einmal verstärkt und in ihrer Last aufnehmenden Eigenschaft letztlich mit bestimmt wird.

Weitere Vorteile und Merkmale der Erfindung ergeben sich aus der nachfolgenden Beschreibung eines Ausführungsbeispiels anhand der beigefügten Figuren. Dabei zeigen:
- Fig. 1a: bis c in drei unterschiedlichen Darstellungen einen in einem erfindungs-gemäßes Fahrgestell für ein Fahrzeug, hier für einen Sattelauflieger, zu verwendenden Längsträger von der Seite (Fig. 1 a) von oben (Fig. 1 b) und in einer dreidimensionalen Ansicht schräg von vorn (Fig. 1 c);
- Fig. 2: schematisch den Aufbau eines wie in Figur 1 gezeigten Längsträgers ohne Innensteg und mit durchgehendem Innenhohlraum;
- Fig. 3: schematisch im Querschnitt den Aufbau eines wie in Figur 1 gezeigten Längsträgers mit einem in dessen Inneren verlaufenden, die obere und untere Außenwand einstückig verbindenden Steg;
- Fig. 4: in einer Ansicht von der Seite ein mit einem Längsträger gemäß Figur 1 versehenes erfindungsgemäßes Fahrgestell eines Lkw-Sattelaufliegers mit daran angeordneten, weiteren Teilen;
- Fig. 5: das Fahrgestell aus Fig. 4 in einer Ansicht von oben, ohne die abschließende Deckplatte zur Darstellung der Lage der Längsträger; und
- Fig. 6: in einer Ansicht von der Seite die Lage des Längsträgers in Bezug auf die Anbauteile unter Fortlassung des sonstigen Fahrgestells zur erläuternden Darstellung.

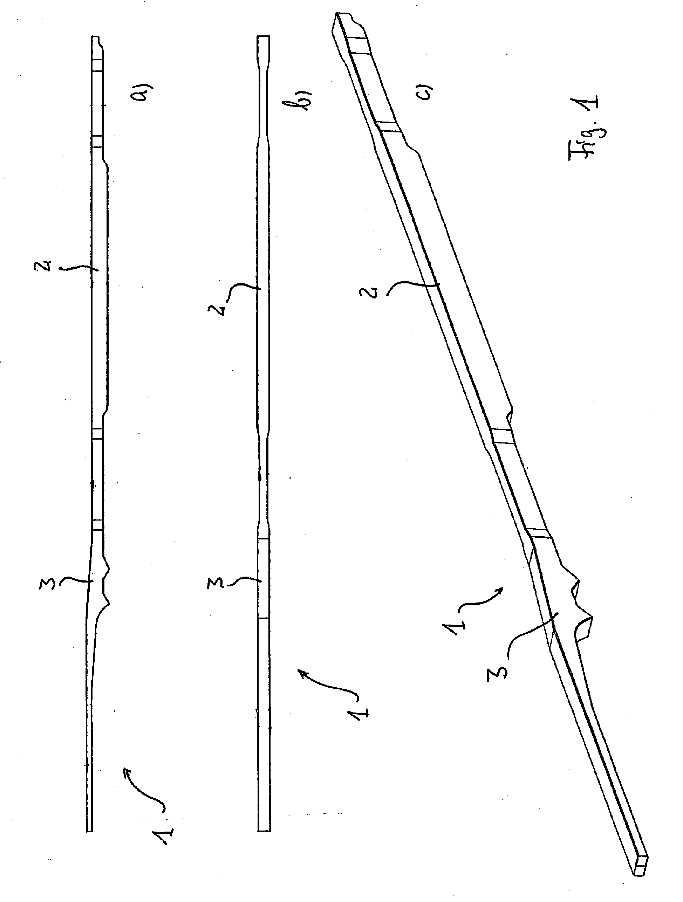

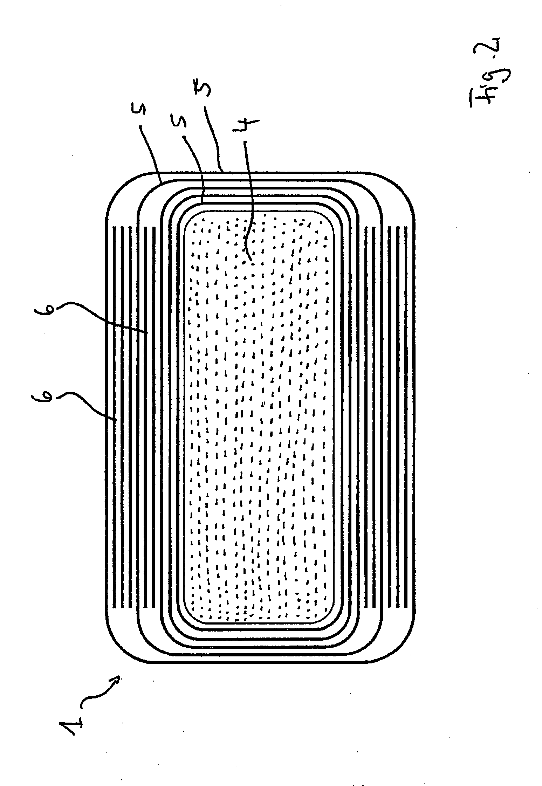

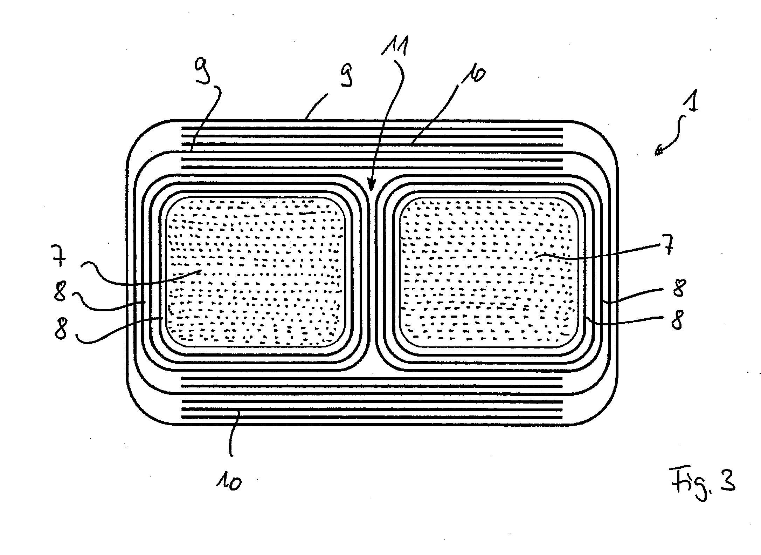

In Fig. 1 ist zunächst ein Längsträger zur Verwendung in einem erfindungsgemäßen Fahrgestell für ein Fahrzeug, hier für einen Lkw-Sattelauflieger, in drei verschiedenen Ansichten von der Seite (Fig. 1 a), von oben (Fig. 1 b) und in einer dreidimensionalen Ansicht schräg von vorn (Fig. 1c) gezeigt und allgemein mit der Bezugsziffer 1 bezeichnet. Der Längsträger 1 weist eine einstückig ausgebildete, in Längsrichtung einen inneren Raum vollständig umschließende Wandung aus einem Faserverbundwerkstoff, insbesondere einem Carbonfaserverbundwerkstoff, auf und ist in weiter untenstehend noch näher zu erfolgender Beschreibung (vgl. Beschreibung der Figuren 2 und 3) aufgebaut.

Der Längsträger 1 ist entlang seines Längsverlaufes unterschiedlich konturiert und weist bestimmte, an die aufzunehmenden Lasten angepasste Funktionsbereiche auf. In einem in Einbaulage des Längsträgers weiter hinten gelegenen Bereich 2 ist dieser sowohl in seiner Breite als auch in seiner Bauhöhe verstärkt. In diesem Bereich werden im fertigen Fahrgestell die Achsen angelagert, so dass dort besonders hohe Belastungen auf den Längsträger einwirken, die die Verstärkung erforderlich machen.

Einen weiteren Bereich 3 mit besonderen Strukturen erkennt man im vorderen Abschnitt des Längsträgers. Dort wird bei fertig aufgebautem Fahrgestell eine Stützkonstruktion mit Stützen angeschlagen, die den Sattelauflieger im abgestellten Zustand in horizontaler Position halten. Auch dort wirken besonders hohe Kräfte auf den Längsträger, die durch die besondere Verstärkung abgefangen werden. In den weiteren Bereichen, in denen keine Lastspitzen aufzunehmen sind, ist der Längsträger in Höhe und Breite reduziert, um Material und letztlich Gewicht zu sparen.

In Fig. 2 ist in einem schematischen Querschnitt der Längsträger 1 in einer Ausgestaltung mit durchgehendem Inneren gezeigt. Im Inneren des Längsträgers 1 befindet sich in dieser Darstellung ein Kern 4, der punktiert angedeutet ist. Um diesen Kern 4, der in einem Längsverlauf durchgehend die Form des Längsträgers, also auch mit den Strukturen z.B. in den Bereichen 2 und 3 vorgibt, sind einzelne Fasermatten, insbesondere Carbonfasermatten, gelegt. Dabei sind den Kern vollständig umgebende Fasermatten 5, mit denen der Kern insbesondere über im Wesentlichen seine gesamte Länge umflochten ist, mit einfachen einlagigen, in anderer Weise gewirkten oder gewebten Fasermatten 6 abgewechselt angeordnet. Die hier zur Verdeutlichung stark auseinandergezogenen einzelnen Fasermatten 5, 6 bilden in der Realität eine eng aufeinander liegende Schichtung, die mit einem Bindemittel, insbesondere einem Harz, z.B. einem Epoxidharz durchtränkt ist zur Ausbildung eines Faserverbundwerkstoffes. Insbesondere dadurch, dass der Kern 4 mit den Carbonfasermatten 5 umflochten ist, welche Carbonfasermatten 5 so für sich bereits eine einstückige Umhüllung des Kerns 4 bilden, und deren Durchtränkung und innigliche Verbindung mit dem Harz als bevorzugtes Bindemittel wird eine einstückige, hochfeste und damit für die Aufnahme hoher Kräfte und Lasten geeignete Struktur erzielt.

Der Kern 4 kann als fester Kern im fertigen Längsträger verbleiben, er kann nach einem Herstellungsverfahren als verlorener Kern aber auch entfernt werden. In dem Kern 4 können insbesondere auch hier nicht gezeigte Leitungsführungen, Leitungen an sich oder Kavitäten zur Führung und Lagerung von Betriebsmedien, Kabelschächte zum Verlegen von elektrischen Leitungen und dgl. Strukturen ausgebildet sein.

In Fig. 3 ist eine alternative Ausgestaltung des Aufbaus des Längsträgers 1 wiederum in stark schematisierter Darstellung gezeigt. Hier sind zwei Kerne 7 ausgebildet und zunächst jeder für sich genommen mit Fasermatten 8, insbesondere Carbonfasermatten, umgeben, insbesondere umflochten. Die so mit Fasern ummantelten Kerne 7 sind nebeneinander positioniert worden, so dass sie insgesamt das Außenprofil des Längsträgers wiedergeben. Um diese Anordnung der beiden Kerne herum sind dann weitere Fasermatten 9, insbesondere Carbonfasermatten, mit denen die Kerne 7 umflochten sind, und abwechselnd in anderer Weise gestaltete, flache Fasermatten 10, insbesondere Carbonfasermatten, angeordnet. Die so gebildete Konstruktion ist insgesamt mit einem Bindemittel, vorzugsweise einem Harz, durchtränkt, so dass um das durch die beiden Kerne 7 gebildete Innere herum eine einstückige Wand gebildet ist, die durch einen mittig in Längsrichtung verlaufenden Steg 1 überbrückt ist zur Erhöhung der Steifigkeit des Längsträgers.

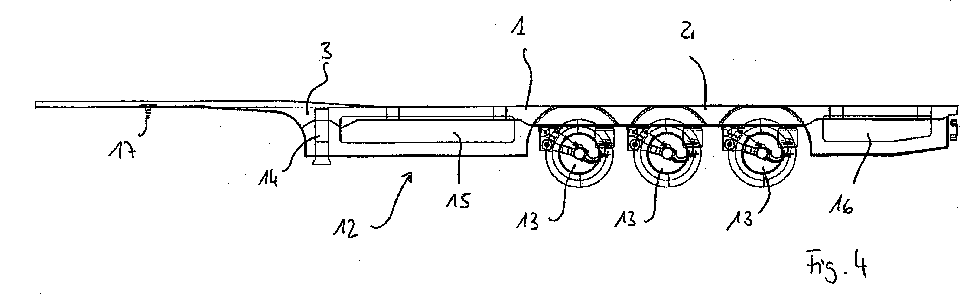

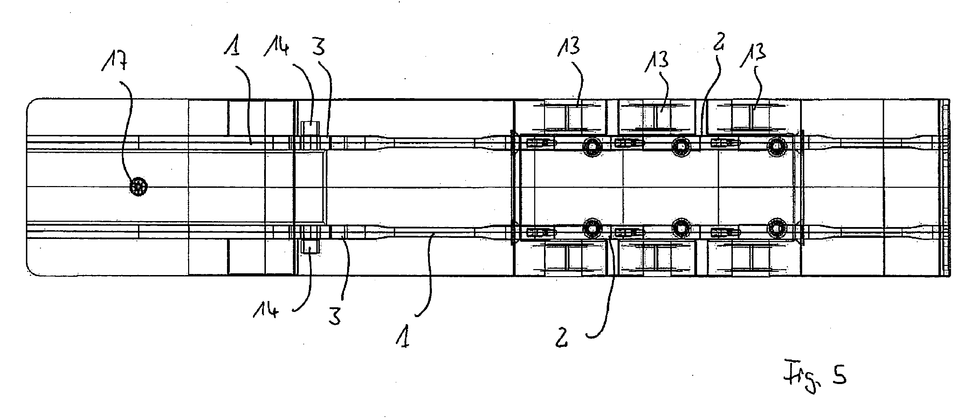

In Fig. 4 ist ein mit entsprechenden Anbauteilen versehenes erfindungsgemäßes Fahrgestell für ein Fahrzeug, hier für einen Lkw-Sattelauflieger, gezeigt, das insgesamt zwei wie in Fig. 1 gezeigte und gemäß einem anhand der Fign. 2 und 3 beschriebenen Aufbau gebildete Längsträger 1 (beide in Fig. 5 zu erkennen) beinhaltet. Die Längsträger 1 sind dabei in eine schalenartige Aufnahme eingesetzt und dort durch Verkleben fixiert, die ein Unterteil des Fahrgestells 12 bildet. Oberseitig ist (hier nicht näher dargestellt) das Fahrgestell 12 mit einem Deckelelement, welches im Wesentlichen eben ist, verschlossen. Das Deckelelement ist dabei sowohl mit den Längsträgern 1 als auch mit dem Unterteil verklebt und so fixiert. Sowohl das Unterteil als auch der Deckel bestehen bevorzug ebenfalls aus einem Faserverbundwerkstoff, insbesondere einem Carbonfaserverbundwerkstoff.

Zu erkennen ist hier, wie im Bereich 2 des Längsträgers 1 insgesamt drei Achsaggregate 13 angeordnet sind. Im Bereich 3 ist die dort angelagerte Stütze 14 zu erkennen.

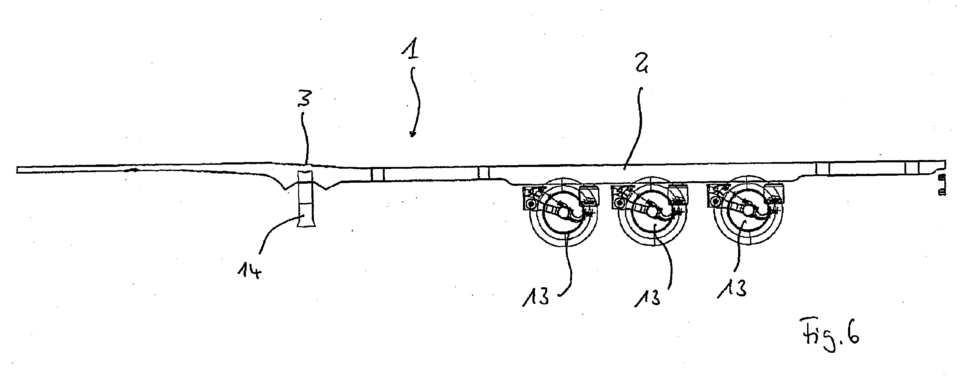

Ferner ist zu erkennen, wie in dem Unteil des Fahrgestells 12, welches ebenfalls aus Carbonfaser-Verbundwerkstoff gebildet ist, einzelne weitere Funktionselemente, nämlich ein sogenanntes Palettenfach 15 sowie weiterer Stauraum 16 im Heckbereich des Fahrgestells angeformt sind. Im vorderen Bereich ist schließlich der im Fahrgestell integrierte Königszapfen 17 dargestellt. In Fig. 5 ist der Aufbau aus Fig. 4 noch einmal in einer Ansicht von oben dargestellt. Fig. 6 zeigt schließlich zur Verdeutlichung noch einmal nur einen Längsträger 1 mit den daran angeordneten Zusatzelementen Achsaggregate 13 und Stütze 14 zur Verdeutlichung der Lage derselben in den Bereichen 2 und 3.

Aus der voranstehenden Beschreibung ist der nutzbringende Wert des erfindungsgemäßen Fahrgestells sowie des Verfahrens zu dessen Herstellung noch einmal deutlich geworden. Der Längsträger in dem Fahrgestell kann in seiner Form individuell abgestimmt auf den Einsatzzweck gebaut und dabei aufgrund der Materialwahl und der besonderen einstückigen Ausgestaltung in hochfester Leichtbauweise verwirklicht werden.

### Bezugszeichenliste

- 1: Längsträger
- 2: Bereich
- 3: Bereich
- 4: Kern
- 5: Fasermatte
- 6: Fasermatte
- 7: Kern
- 8: Fasermatte
- 9: Fasermatte
- 10: Fasermatte
- 11: Fasermatte
- 12: Fahrgestell
- 13: Achsaggregat
- 14: Stütze
- 15: Palettenfach
- 16: Stauraum

## Patentansprüche

1. Fahrgestell eines Fahrzeuges mit wenigstens einem Längsträger (1), welcher eine ein Inneres in seiner Längsrichtung vollständig umschließende, einstückig gebildete Wand aus einem Faserverbundwerkstoff, insbesondere einem Carbonfaserverbundwerkstoff, aufweist, **gekennzeichnet dadurch** daβ das Fahrgestell ein unteres aus einem Faserverbundwerkstoff, insbesondere einem Carbonfaserverbundwerkstoff, bestehendes, wannenartiges Unterteil mit hochgezogenen Seitenwänden aufweist, wobei in dem Unterteil der wenigstens eine Längsträger (1) eingesetzt und festgelegt, insbesondere flächig verklebt, ist, und durch ein oberseitig auf das Unterteil aufgesetztes, im wesentlichen flaches, aus einem Faserverbundwerkstoff, insbesondere einem Carbonfaserverbundwerkstoff, bestehendes Deckelteil, welches mit dem Unterteil fest verbunden, insbesondere verklebt ist.

2. Fahrgestell nach Anspruch 1, **gekennzeichnet durch** an dem Unterteil einstückig angeformte Funktionselemente (15, 16), wie z.B. Stau- und Aufnahmeräume, Radkästen, Lager für Schwenkstützen, Aufnahmen für einen Königszapfen oder dergleichen.

3. Fahrgestell nach einem der vorhergehenden Ansprüche, **dadurch gekennzeichnet, dass** in dem Inneren des wenigstens einen Längsträgers (1) ein Kern (4, 7) aus einem anderen Material als dem Faserverbundwerkstoff angeordnet ist.

4. Fahrgestell nach Anspruch 3, **dadurch gekennzeichnet, dass** der Kern (4, 7) des wenigstens einen Längsträgers (1) aus einem geschäumten Material, insbesondere geschäumten Kunststoff, vorzugsweise aus geschäumtem PE oder geschäumten PP, besteht.

5. Fahrgestell nach einem der vorhergehenden Ansprüche, **dadurch gekennzeichnet, dass** der wenigstens eine Längsträger (1) in dem Innern wenigstens einen zwei einander gegenüberliegende Längsseiten verbindenden, mit der Wand einstückig verbundenen, sich in Längsrichtung des Längsträgers (1) zumindest über einen Teil von dessen Länge erstreckenden Steg (11) aufweist.

6. Fahrgestell nach einem der vorhergehenden Ansprüche, **dadurch gekennzeichnet, dass** die Wand des wenigstens einen Längsträgers (1) aus mehreren Lagen von übereinanderliegenden, über ein ausgehärtetes Bindemittel miteinander inniglich verbundenen Fasermatten (5, 6, 8, 9, 10), insbesondere Carbonfasermatten, besteht.

7. Fahrgestell nach Anspruch 6, **dadurch gekennzeichnet, dass** wenigstens eine der Fasermatten (5, 8, 9) in der Wand des wenigstens einen Längsträgers (1) eine aus einzelnen Fasern oder Fasersträngen durch Umflechten des Kerns (4, 7) gebildete Fasermatte (5, 8, 9) ist.

8. Fahrgestell nach einem der vorhergehenden Ansprüche, **dadurch gekennzeichnet, dass** der wenigstens eine Längsträger (1) in seinem Inneren Leitungen, Leitungsschächte und/oder Lagerkavitäten für die Lagerung von Betriebsmedien aufweist

9. Fahrzeug mit einem Fahrgestell nach einem der Ansprüche 1 bis 8.

10. Verfahren zum Herstellen eines Fahrgestells eines Fahrzeuges mit folgenden Schritten:
a) Herstellen wenigstens eines die Form des späteren Längsträgers bestimmenden Kernes;
b) Belegen des wenigstens einen Kernes mit wenigstens einer Fasermatte, insbesondere einer Carbonfasermatte, so dass der Kern in Längsrichtung gesehen umfangsseitig vollständig umschlossen ist;
c) Tränken der wenigstens einen Fasermatte mit einem Bindemittel, insbesondere einem Harz;
d) Aushärtenlassen des Bindemittels zum Ausbilden eines den Kern umgebenden, den Längsträger bildenden Faserverbundwerkstoffes, insbesondere eines Carbonfaserverbundwerkstoffes;
e) Bereitstellen eines aus einem Faserverbundwerkstoff, insbesondere einem Carbonfaserverbundwerkstoff, bestehenden, wannenartigen Unterteils mit hochgezogenen Seitenwänden;
f) Bereitstellen eines aus einem Faserverbundwerkstoff, insbesondere einem Carbonfaserverbundwerkstoff, bestehenden Deckelteils;
g) Einsetzen und Festlegen, insbesondere flächiges Verkleben, des in Schritt d) erhaltenen Längsträgers in das wannenartige Unterteil;
h) Verschließen und festes Verbinden, insbesondere Verkleben, des wannenartigen Unterteils mit dem Deckelteil.

11. Verfahren nach Anspruch 10, **dadurch gekennzeichnet, dass** der Kern aus einem geschäumten Material, insbesondere einem Kunststoffschaum, gebildet wird.

12. Verfahren nach einem der vorhergehenden Ansprüche, **dadurch gekennzeichnet, dass** nach dem Aushärten des Bindemittels der Kern entfernt wird.

13. Verfahren nach einem der vorhergehenden Ansprüche, **dadurch gekennzeichnet, dass** die wenigstens eine Fasermatte aus einzelnen Fasern oder Fasersträngen durch Umflechten des Kerns gebildet wird.

## Claims

1. A rolling chassis of a vehicle having at least one longitudinal beam (1), which has a single piece wall, completely surrounding an interior in its longitudinal direction, made of a fibre compound material, in particular a carbon fibre compound material, **characterised in that** the rolling chassis exhibits a tub-shaped lower portion, made of a fibre compound material, in particular a carbon fibre compound material with raised side walls, whereas said at least one longitudinal beam (1) is inserted and fixed, in particular glued flat in the lower portion and is glued by a cover made of a fibre compound material, in particular a carbon fibre compound material, substantially flat, laid on the lower portion, which is connected, in particular glued, to the lower portion.

2. A rolling chassis according to claim 1, **characterised by** functional elements (15, 16) integrally formed as a single piece on the lower portion, such as for instance accumulation and reception areas, wheel housing, bearing for pivot supports, seats for a kingpin or similar.

3. A rolling chassis according to any of the preceding claims, **characterised in that** a core (4, 7), made of another material than the fibre compound material, is arranged in the inner portion of said at least one longitudinal beam (1).

4. A rolling chassis according to claim 3, **characterised in that** the core (4, 7) of said at least one longitudinal beam (1) consists of a foamed material, in particular a foamed synthetic matierial, preferably a foamed PE or a foamed PP.

5. A rolling chassis according to any of the preceding claims, that said at least one longitudinal beam (1) contains at least one bridge (11) extending in longitudinal direction of the longitudinal beam (1), at least over a portion of its length, connected as a single piece with the wall, connecting two longitudinal sides which are opposite one another.

6. A rolling chassis according to any of the preceding claims, **characterised in that** the wall of said at least one longitudinal beam (1) consists of several layers of fibre mats (5, 6, 8, 9, 10), in particular carbon fibre mats, on top of one another, firmly connected to each other via a hardened binder.

7. A rolling chassis according to claim 6, **characterised in that** least one of the fibre mats (5, 8, 9) in the wall of said at least one longitudinal beam (1) is a fibre mat (5, 8, 9) formed of individual fibres or fibre strands by braiding the core (4, 7).

8. A rolling chassis according to any of the preceding claims, **characterised in that** said at least one longitudinal beam (1) exhibits in its internal section pipes, cable ducts and/or bearing cavities for the storage of operating means.

9. A vehicle having a rolling chassis according to one of the claims 1 to 8.

10. A method for manufacturing a rolling chassis of a vehicle with the following steps:
a) Production of at least one core defining the form of the later longitudinal beam;
b) Coating said at least one core having at least one fibre mat, in particular a carbon fibre mat so that the core is surrounded completely on its circumference, seen in longitudinal direction;
c) Soaking said at least one fibre mat with a binder, in particular a resin;
d) Letting the binder harden to form a fibre compound material, in particular a carbon fibre compound material, forming the longitudinal beam element and surrounding the core.
e) Preparation of a tub-shaped lower portion with raised side walls, consisting of a fibre compound material, in particular a carbon fibre compound material;
f) Preparation of a lid consisting of a fibre compound material, in particular a carbon fibre compound material;
g) Laying and fastening, in particular flat gluing, of the longitudinal beam obtained in step d) into the tub-shaped lower portion;
h) Sealing and solidly bonding, in particular gluing, of the tub-shaped lower portion with the lid.

11. A method according to claim 10, **characterised in that** the core consists of a foamed material, in particular a plastic foam.

12. A method according to any of the preceding claims, **characterised in that** the core is removed once the binder has set.

13. A method according to any of the preceding claims, **characterised in that** said at least one fibre mat consists of individual fibres or fibre strands by braiding of the core.

## Revendications

1. Châssis mobile d'un véhicule comportant au moins un longeron (1), présentant une paroi d'un seul tenant, entourant complètement une partie interne dans sa direction longitudinale, paroi composée d'un matériau composite à fibres, notamment d'un matériau composite à fibres de carbone, **caractérisé en ce que** le châssis mobile présente une partie inférieure en forme de cuvette, composée d'un matériau composite à fibres, notamment d'un matériau composite à fibres de carbone, aux panneaux latéraux relevés, dans lequel ledit au moins un longeron (1) est inséré et maintenu, notamment collé bien à plat dans la partie inférieure, et est collé, soit fixé à demeure avec la partie inférieure, par un capot posé sur son côté supérieur sur la partie inférieure, capot essentiellement plat, composé d'un matériau composite à fibres, notamment d'un matériau composite à fibres de carbone.

2. Châssis mobile selon la revendication 1, **caractérisé par** des éléments fonctionnels (15, 16) conformés d'un seul tenant sur la partie inférieure, comme par exemple des espaces de retenue et de réception, un passage de roues, des paliers pour appuis pivotants, réceptacles pour un pivot central ou autres.

3. Châssis mobile selon l'une quelconque des revendications précédentes, **caractérisé en ce qu'**un noyau (4, 7) composé d'un autre matériau que le matériau composite à fibres est disposé à l'intérieur dudit au moins un longeron (1).

4. Châssis mobile selon la revendication 3, **caractérisé en ce que** le noyau (4, 7) dudit au moins un longeron (1) se compose d'un matériau mousse, notamment un matériau synthétique mousse, de préférence de PE mousse ou de PP mousse.

5. Châssis mobile selon l'une quelconque des revendications précédentes, **caractérisé en ce que** ledit au moins un longeron (1) présente dans la partie interne au moins une entretoise (11) reliant deux côtés longitudinaux opposés l'un à l'autre, reliée d'un seul tenant avec la paroi, s'étendant dans l'axe longitudinal du longeron (1) au moins sur une partie de la longueur de celui-ci.

6. Châssis mobile selon l'une quelconque des revendications précédentes, **caractérisé en ce que** la paroi dudit au moins un longeron (1) se compose couches de nappes fibres (5, 6, 8, 9, 10), en particulier des nappes de fibres de carbone, superposées et reliées solidement par un liant durci.

7. Châssis mobile selon la revendication 6, **caractérisé en ce qu'**au moins l'une des nappes de fibres (5, 8, 9) dans la paroi dudit au moins un longeron (1) est une nappe de fibres (5, 8, 9) constituée de diverses fibres ou brins de fibres par entrelacement du noyau (4, 7).

8. Châssis mobile selon l'une quelconque des revendications précédentes, **caractérisé en ce que** ledit au moins un longeron (1) présente dans sa partie interne des conduits, des passages de câbles et/ou des cavités de stockage pour le stockage de moyens d'exploitation.

9. Véhicule muni d'un châssis mobile selon l'une des revendications 1 à 8.

10. Procédé de fabrication d'un châssis mobile de véhicule comportant les phases suivantes:
a) Fabrication d'au moins un noyau définissant la fomr du longeron postérieur;
b) Garniture dudit au moins un noyau comportant au moins une nappe de fibres, notamment une nappe de fibres de carbone, de sorte que le noyau est intégralement entouré sur sa circonférence, dans le sens longitudinal;
c) Imprégnation de ladite au moins une nappe de fibres avec un liant, notamment une résine;
d) Laisser durcir le liant pour générer un matériau composite à fibres, notamment un matériau composite à fibres de carbone, constituant le longeron et entourant le coeur.
e) Préparation d'une partie inférieure en forme de cuve, aux parois latérales relevées, composée d'un matériau composite à fibres, notamment d'un matériau composite à fibres de carbone;
f) Préparation d'un capot composée d'un matériau composite à fibres, notamment d'un matériau composite à fibres de carbone;
g) Pose et fixation, notamment par collage bien à plat du longeron obtenu à l'étape d), dans la partie inférieure en forme de cuve;
h) Fermeture et solidarisation, notamment par collage, de la partie inférieure en forme de cuve avec le capot.

11. Procédé selon la revendication 10, **caractérisé en ce que** le coeur est constitué d'un matériau mousse, en particulier d'un mousse synthétique.

12. Procédé selon l'une quelconque des revendications précédentes, **caractérisé en ce que** l'on retire le coeur après durcissement du liant.

13. Procédé selon l'une quelconque des revendications précédentes, **caractérisé en ce qu'**au moins ladite nappe de fibres est composée de différentes fibres ou différents brins de fibres par entrelacement du coeur.
